# EUROPEAN PATENT APPLICATION

(11) **EP 2 139 244 A1**
(43) Date of publication of application: **30.12.2009**
(21) Application number: 08721934.1
(22) Date of filing: 12.03.2008
(51) Int. Cl.: H04Q 7/32, H04B 7/08

(54) **USER DEVICE, BASE STATION DEVICE, MOBILE COMMUNICATION SYSTEM AND COMMUNICATION CONTROL METHOD**

(30) Priority: 23.03.2007 JP 2007077899
(71) Applicant: NTT DoCoMo, Inc., Chiyoda-ku Tokyo 100-6150 (JP)
(72) Inventor: ISHII, Hiroyuki, Tokyo 100-6150 (JP); NAKAMURA, Takehiro, Tokyo 100-6150 (JP)
(74) Representative: Spilgies, Jan-Hendrik
(86) International application number: PCT/JP2008/054518
(87) International publication number: WO 2008/126604

(57) **Abstract**

A user apparatus that communicates with a base station apparatus in a mobile communication system includes: a plurality of antennas; a selection unit configured to select an antenna according to a frequency; and a reception unit configured to receive a signal using the antenna selected by the selection unit. The selection unit selects all of the plurality of antennas when the frequency is greater than a predetermined threshold (1 GHz, for example), and the selection unit selects one of the plurality of antennas when the frequency is not greater than a predetermined threshold.

## Description

### TECHNICAL FIELD

The present invention relates to a radio communication system. More particularly, the present invention relates to a base station apparatus, a user apparatus, a mobile communication system and a communication control method.

### BACKGROUND ART

3GPP that is a standardization group of W-CDMA is studying a communication scheme that becomes a successor to W-CDMA and HSDPA, that is, 3GPP is studying Long Term Evolution (LTE). As radio access schemes, OFDM (Orthogonal Frequency Division Multiplexing) is being studied for downlink, and SC-FDMA (Single-Carrier Frequency Division Multiple Access) is being studied for uplink (refer to non-patent document 1, for example).

OFDM is a multicarrier scheme for dividing a frequency band into a plurality of narrow frequency bands (subcarriers) so as to perform transmission by carrying data on each subcarrier. By arranging the subcarriers on frequencies densely without interfering with each other while a part of them overlap, high speed transmission is realized so that efficiency of use of frequency increases.

SC-FDMA is a single carrier scheme that can decrease interference among terminals by dividing frequency band and performing transmission using frequency bands that are different among a plurality of terminals. Since the SC-FDMA has characteristics that variation of transmission power becomes small, low power consumption in the terminal and wide coverage can be realized.

LTE is a system in which a plurality of mobile stations share one or more physical channels in the uplink and the downlink for performing communication. The channel shared by the plurality of mobile stations is generally called a shared channel. In LTE, the channel is the Physical Uplink Shared Channel (PUSCH) in the uplink, and is the Physical Downlink Shared Channel (PDSCH) in the downlink.

In the communication system using the above-mentioned shared channel, it is necessary to signal information indicating which mobile station is assigned the shared channel for each subframe (1 ms in LTE, which may be called TTI (Time Transmission Interval)). In LTE, a control channel used for the signaling is called Physical Downlink Control Channel (PDCCH) or Downlink L1/L2 Control Channel (DL L1/L2 Control Channel). Information of the physical downlink control channel includes, for example, downlink scheduling information, acknowledgement information (ACK/NACK), uplink scheduling grant, overload indicator, transmission power control command bit and the like (refer to non-patent document 2, for example). The acknowledgement information (ACK/NACK) may be called physical hybrid ARQ indicator channel (PHICH). The PHICH may be defined as a different physical channel that is not included in the PDCCH, but is in parallel with the PDCCH.

The downlink scheduling information and the uplink scheduling grant correspond to the information for signaling which mobile station is assigned the shared channel. The downlink scheduling information includes, for example, assignment information of resource blocks in downlink, ID of UE, the number of streams, information on precoding vector, data size, modulation scheme, information on HARQ (hybrid automatic repeat request), and the like with respect to the downlink shared channel. The downlink scheduling information may be called downlink assignment information or downlink scheduling grant.

The uplink scheduling grant includes, for example, assignment information of resource blocks in uplink, ID of UE, data size, modulation scheme, uplink transmission power information, demodulation reference signal in uplink MIMO, and the like with respect to the uplink shared channel. The downlink scheduling information and the uplink scheduling grant may be collectively called Downlink Control Information (DCI).

By the way, in the mobile communication system, there is a case in which receive diversity is applied for receiving a signal using equal to or greater than two antennas in order to improve transmission characteristics. For example, in base station apparatuses in WCDMA other than simple base station apparatuses used indoors and the like, it is normal to perform reception using the receive diversity by two antennas.

However, there is a problem in that the size of the mobile station increases when the mobile station is provided with two antennas and the receive diversity is applied. For example, when the mobile station is provided with two antennas, it is necessary to provide a space for the two antennas and a space for two RF units, so that the size of the mobile station increases. For more detail, in order to obtain effect of improvement of transmission characteristics by the receive diversity, generally, the distance between the two antennas needs to be at least about 1/3 - 1/2 wavelength. That is, when the frequency used for communication is 2 GHz (wavelength : 15 cm), the distance between the antennas needs to be from 5 cm to 7.5 cm. When the frequency used for communication is 800 MHz (wavelength : 37.5 cm), the distance between the antennas needs to be from 12.5 cm to 19 cm.

In addition, in the mobile communication system, a pilot channel and a common channel are transmitted in the downlink. The pilot channel is used for channel estimation in the mobile station and is used as an indicator for performing handover. In LTE, the pilot channel is called a downlink reference signal. The common channel is a channel used for transmission of broadcast information and for paging, and synchronization signal and the like. The common channel by which broadcast information is transmitted in LTE is called CCPCH (Common Control Physical Channel) or Physical Broadcast Channel (P-BCH). Broadcast information called Dynamic BCH may be mapped to PDSCH. The pilot channel and the common channel are designed such that every mobile station in a cell which is a communication area of the mobile communication system can receive. More particularly, radio resources are assigned for the pilot channel and the common channel such that every mobile station in the cell can receive the channels. The radio resources are power resources and frequency resources. The frequency resources correspond to the number of resource blocks and the number of subcarriers in LTE.

When mobile stations that perform reception using receive diversity and mobile stations that do not perform reception using receive diversity (that is, mobile stations that perform reception using one antenna) coexist, design for the pilot channel and the common channel is performed based on the mobile stations that perform reception using one antenna. This is because every mobile station in the cell can receive the pilot channel and the common channel.

For example, even though the ratio of the mobile stations performing reception using receive diversity is 80 % and the ratio of the mobile stations performing reception using one antenna is 20 %, design for the pilot channel and the common channel is performed to suit the mobile stations performing reception using one antenna. This means to assign more radio resources to the pilot channel and the common channel based on the mobile station that perform reception using one antenna, which is not desirable from the viewpoint of radio capacity because the mobile stations that perform diversity reception can maintain required quality even when so much resources are not assigned for the pilot channel and the like. From the viewpoint of design of the pilot channel and the common channel, it is desirable that every mobile station performs reception using the receive diversity.
[Non-patent document 1] 3GPP TR 25.814 (V7.0.0), "Physical Layer Aspects for Evolved UTRA," June 2006
[Non-patent document 2] R1-070103, Downlink L1/L2 Control Signaling Channel Structure: Coding
[Non-patent document 3] TS25.101, v7.6.0

### DISCLOSURE OF THE INVENTION

### PROBLEM TO BE SOLVED BY THE INVENTION

However, there is a following problem in the above-mentioned background art.

There is a problem in that the size of the mobile station that performs reception using receive diversity increases. This problem becomes more prominent when the frequency used for communication is small, for example, when the frequency is 800 MHz rather than when the frequency is 2 GHz.

On the other hand, from the viewpoint of design of the pilot channel and the common channel, it is desirable that every mobile station performs reception using receive diversity.

In view of the above-mentioned problem, an object of the present invention is to provide a mobile station, a base station apparatus, a radio communication system and a communication control method by which the pilot channel and the common channel can be efficiently designed while reducing increase of the size of the mobile station by setting presence or absence of application of receive diversity for each frequency.

### MEANS FOR SOLVING THE PROBLEM

In the present invention, a user apparatus that communicates with a base station apparatus in a mobile communication system is used. The user apparatus includes: a plurality of antennas; a selection unit configured to select an antenna according to a frequency; and a reception unit configured to receive a signal using the antenna selected by the selection unit.

### BRIEF DESCRIPTION OF THE DRAWINGS

Fig.1 is a diagram showing a radio communication system according to an embodiment of the present invention;
Fig.2 is a block diagram showing a mobile station according to an embodiment of the present invention;
Fig.3 is a partial block diagram showing a base station according to an embodiment of the present invention;
Fig.4 is a block diagram showing details of a baseband signal processing unit;
Fig.5 is a flowchart of an operation example used in the mobile station according to an embodiment of the present invention; and
Fig.6 is a flowchart of an operation example used in the base station according to an embodiment of the present invention.

### Description of reference signs

50 cell
100₁, 100₂, 100₃, 100ₙ user apparatus
1021, 1022 transmit and receive antenna
1041, 1042 amplifying unit
1061, 1062 transmit and receive unit
107 switch unit
108 baseband signal processing unit
112 call processing unit
114 application unit
200 base station apparatus
202 transmit and receive antenna
204 amplifying unit
206 transmit and receive unit
208 baseband signal processing unit
210 call processing unit
212 transmission line interface
2081 layer 1 processing unit
2082 MAC processing unit
2083 RLC processing unit
2084 transmission power control unit
300 access gateway apparatus
400 core network

### PREFERRED EMBODIMENTS FOR CARRYING OUT THE INVENTION

Next, embodiments of the present invention are described with reference to figures. In all of the figures for explaining embodiments, the same reference symbols are used for parts having the same function, and repeated descriptions are not given.

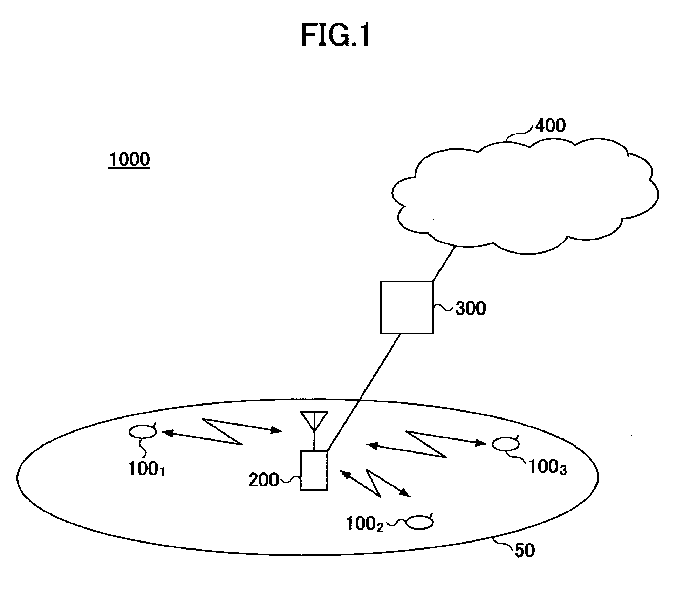

A mobile communication system including a mobile station and a base station apparatus according to an embodiment of the present invention is described with reference to Fig.1.

The radio communication system 1000 is a system to which Evolved UTRA and UTRAN (Another name: Long Term Evolution, or Super 3G) is applied, for example. The radio communication system 1000 includes a base station apparatus (eNB: eNode B) 200 and a plurality of mobile stations 100ₙ (100₁, 100₂, 100₃, ···100ₙ, n is an integer and n>0) which communicate with the base station apparatus 200. The base station apparatus 200 is connected to an upper station, that is, an access gateway apparatus 300, for example, and the access gateway apparatus 300 is connected to a core network 400. The user apparatus 100ₙ is communicating with the base station apparatus 200 by Evolved UTRA and UTRAN in a cell 50.

In the following, since the mobile stations (100₁, 100₂, 100₃, ···100ₙ) have the same configurations, functions and states, a user apparatus 100ₙ is described unless otherwise mentioned. For the sake of convenience of explanation, although the entity which communicates with the base station apparatus by radio is the user apparatus, it may be a user apparatus (UE: User Equipment) including a mobile terminal and a fixed terminal more generally.

As radio access schemes, the radio communication system 1000 uses OFDM (orthogonal frequency division multiplexing) in downlink, and uses SC-FDMA (single carrier - frequency division multiple access) in uplink. As mentioned above, OFDM is a scheme in which a frequency band is divided into a plurality of narrow frequency bands (subcarriers) so that transmission is performed by mapping data on each subcarrier. SC-FDMA is a single carrier transmission scheme that can decrease interference among terminals by dividing a frequency band for each terminal and by using different frequency bands with each other by a plurality of terminals.

In the following, communication channels in the Evolved UTRA and UTRAN are described.

In the downlink, the physical downlink shared channel (PDSCH) shared by each mobile station 100ₙ and the physical downlink control channel (PDCCH) are used. The physical downlink control channel is also called a downlink L1/L2 control channel. User data, that is, a normal data signal is transmitted by the physical downlink shared channel. Also, the physical downlink control channel transmits downlink scheduling information, acknowledgment information (ACK/NACK), uplink scheduling information (uplink scheduling grant), overload indicator, transmission power control command bit and the like.

The downlink scheduling information includes, for example, ID of a user performing communication using the physical downlink shared channel, information of transport format of the user data that is information on data size, modulation scheme and HARQ, and includes assignment information of downlink resource blocks, and the like. The downlink scheduling information may be called Downlink Assignment Information or Downlink Scheduling Grant.

The uplink scheduling grant includes, for example, ID of a user performing communication using the physical uplink shared channel, information of transport format of the user data that is information of data size and modulation scheme, and includes assignment information of the uplink resource blocks, information on transmission power of the uplink shared channel, and the like. The uplink resource block corresponds to frequency resources, and is also called a resource unit. The downlink scheduling information and the uplink scheduling grant may be collectively called Downlink Control Information (DCI).

The acknowledgement information (ACK/NACK) is acknowledgement information on the uplink shared channel. The physical channel to which the acknowledgement information (ACK/NACK) is mapped may be called Physical HARQ channel (PHICH). The PHICH may be defined as a different physical channel that is not included in the PDCCH but is parallel to the PDCCH.

In the uplink, the physical uplink shared channel (PUSCH) shared by each mobile station 100ₙ and the physical uplink control channel are used. The physical uplink shared channel transmits user data, that is, the normal data signal. In addition, the physical uplink control channel transmits downlink quality information (CQI: Channel Quality Indicator) used for scheduling processing for the physical downlink shared channel and for the adaptive modulation and coding scheme (AMCS), and transmits acknowledgment information of the physical downlink shared channel. The contents of the acknowledgment information are represented as either one of Acknowledgement (ACK) indicating that a transmission signal has been properly received or Negative Acknowledgement (NACK) indicating that the signal has not been properly received.

In addition to the CQI and the acknowledgement information, the physical uplink control channel may transmit a scheduling request requesting resource assignment of the uplink shared channel, resource request in persistent scheduling, and the like. The resource assignment of the uplink shared channel means that the base station apparatus reports, using the physical downlink control channel of a subframe, information to the mobile station indicating that the mobile station is permitted to perform communication using the uplink shared channel in a following subframe.

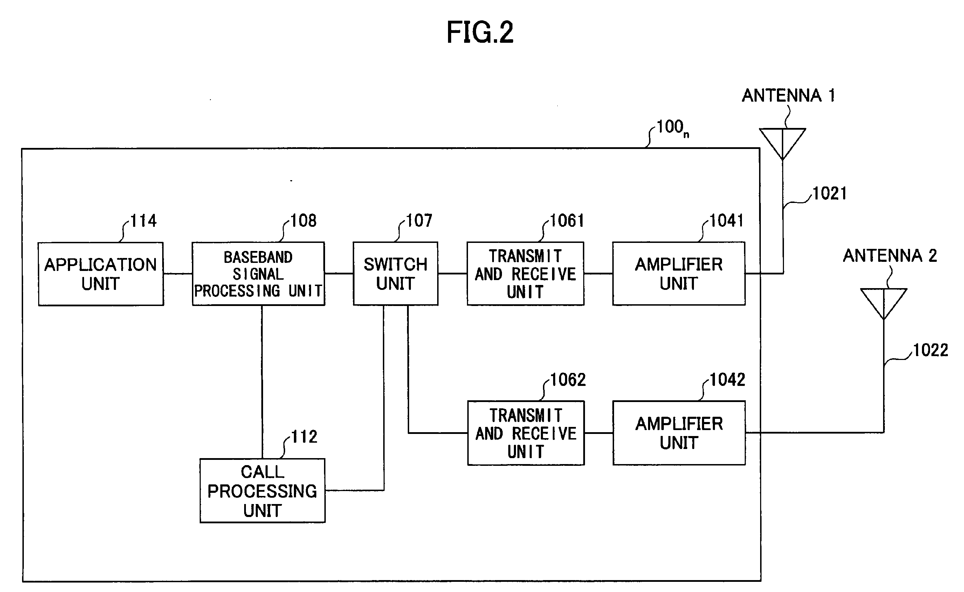

The mobile station 100ₙ according to an embodiment of the present invention is described with reference to Fig.2.

As shown in the figure, the mobile station 100ₙ includes two antennas (antenna 1021, antenna 1022), two amplifier units (amplifier unit 1041, amplifier unit 1041), two transmit and receive units (transmit and receive unit 1061, transmit and receive unit 1062), a switch unit 107, a baseband signal processing unit 108, an application unit 110, and a call processing unit 112.

The mobile station 100ₙ is provided with the two antennas and the two amplifier units, and the two transmit and receive units. When the switch unit 107 determines to apply receive diversity, the mobile station 100ₙ performs reception of downlink radio signals based on receive diversity by using the two antennas, the two amplifier units, and the two transmit and receive units. When the switch unit 107 determines not to apply receive diversity, the mobile station 100ₙ performs reception of downlink radio signals by using one antenna of the two antennas, one amplifier unit of the two amplifier units, and one transmit and receive unit of the two transmit and receive units. In addition, the switch unit 107 receives information on frequency being used for communication from the call processing unit 112, and determines to apply receive diversity when the frequency being used for communication is greater than a predetermined threshold. The switch unit 107 determines not to apply receive diversity when the frequency being used for communication is not greater than the predetermined threshold.

The operation is described in more detail in the following.

First, a case where the switch unit 107 determines to apply receive diversity is described. Processing in the switch unit 107 is described later.

A downlink radio frequency signal received by the antenna 1021 is amplified by the amplifier unit 1041, and frequency-converted by the transmit and receive unit 1061 into a baseband signal. Also, a downlink radio frequency signal received by the antenna 1022 is amplified by the amplifier unit 1042, and frequency-converted by the transmit and receive unit 1062 into a baseband signal. The two baseband signals are combined after FFT processing is performed in the baseband signal processing unit 108. As a method for combining, maximal ratio combining may be used, for example. Then, error correction decoding, reception processing of retransmission control, and reception processing in RLC layer and the like are performed on the combined signal.

Next, a case where the switch unit 107 determines not to apply receive diversity is described. Processing in the switch unit 107 is described later. In the following, as an antenna, an amplifier unit and a transmit and receive unit used when receive diversity is not applied, the antenna 1021, the amplifier unit 1041 and the transmit and receive unit 1061 are used.

A downlink radio frequency signal received by the antenna 1021 is amplified by the amplifier unit 1041, and frequency-converted by the transmit and receive unit 1061 into a baseband signal. FFT processing, error correction decoding, reception processing of retransmission control, reception processing of RLC/PDCP layer and the like are performed on the baseband signal in the baseband signal processing unit 108.

A signal on which the above-mentioned processing has been performed in the baseband signal processing unit 108, that is, downlink user data is transferred to the application unit 110. The application unit 110 performs processing of an upper layer of the physical layer, MAC layer and RLC layer.

As to uplink transmission, uplink user data is input to the baseband signal processing unit 108 from the application unit 110. The baseband signal processing unit 108 performs processing of PDCP (Packet Data Convergence Protocol), transmission processing of RLC layer such as user data segmentation and concatenation and transmission processing of RLC (radio link control) retransmission control, MAC layer transmission processing such as transmission processing and the like of the retransmission control (H-ARQ (Hybrid ARQ)), channel coding, IFFT processing and the like, and the processed signal is transferred to the transmit and receive unit 1061. The transmit and receive unit 1061 performs frequency conversion processing to convert the baseband signal output from the baseband signal processing unit 108 into radio frequency band. After that, the signal is amplified by the amplifier unit 1041 and transmitted from the antenna 1021. By the way, in the above-mentioned examples, uplink transmission is performed by using one of the two transmit and receive units, one of the two amplifier units, and one of the antennas. Instead of that, both of the two transmit and receive units, both of the two amplifier units, and both of the antennas may be used.

The above-mentioned user data is IP packet for web browsing, file transfer (FTP), voice packet (VoIP) and the like, or is a control signal for RRC (Radio Resource Control) processing, or the like. And, the user data is called as DTCH or DCCH, for example, as a logical channel.

The switch unit 107 receives information on frequency being used for communication from the call processing unit 112. The information on frequency being used for communication may be, for example, a center frequency of a frequency band in uplink and downlink used for communication, or may be a frequency number. The frequency number in 3GPP is defined in the non-patent document 3 (TS25.101, 5.4.3). Or, the information on frequency being used for communication may be frequency bands. Frequency bands (I, II, III, IV, ...) in 3GPP are defined in the non-patent document 3 (TS 25.101, 5.2) for example.

The switch unit 107 has the predetermined threshold, and determines to apply receive diversity when the frequency being used in communication is greater than the predetermined threshold. And, the switch unit 107 determines not to apply receive diversity when the frequency being used in communication is not greater than the predetermined threshold.

The embodiment is described in more detail as to a case where the predetermined threshold is 1 GHz.

For example, when the center frequency of the frequency being used for communication in the downlink is 890 MHz, the switch unit 107 may determine not to apply receive diversity, and the switch unit 107 may determine to apply receive diversity when the frequency being used for communication is 2120 MHz.

Alternatively, the switch unit 107 may determine not to apply receive diversity when the frequency band being used for communication is the band VI (Uplink 830-840 MHz, downlink 875-885 MHz), and the switch unit 107 may determine to apply receive diversity when the frequency band being used for communication is the band I (Uplink 1920-1980 MHz, downlink 2110-2170 MHz).

The call processing unit 112 performs call processing such as setting and release of communication channels, that is, control of communication state, and performs state management of the mobile station 100ₙ.

In addition, the call processing unit 112 reports information on the frequency being used for communication to the switch unit 107. The information on frequency being used for communication may be, for example, a center frequency of a frequency band in uplink and downlink for communication, or may be a frequency number. The frequency number in 3GPP is defined in the non-patent document 3 (TS25.101, 5.4.3). Or, the information on frequency being used for communication may be frequency bands. Frequency bands (I, II, III, IV, ...) in 3GPP are defined in the non-patent document 3 (TS 25.101, 5.2), for example.

The call processing unit 112 may exchange control signals with the base station apparatus 200 when originating a call or receiving a call, and report a determined frequency to the switch unit 107 at a timing when the frequency used for communication is determined. Alternatively, the call processing unit 112 may reports a changed frequency to the switch unit 107 at a timing when the frequency being used for communication changes. Alternatively, the call processing unit 112 may periodically reports the frequency used for communication to the switch unit 107.

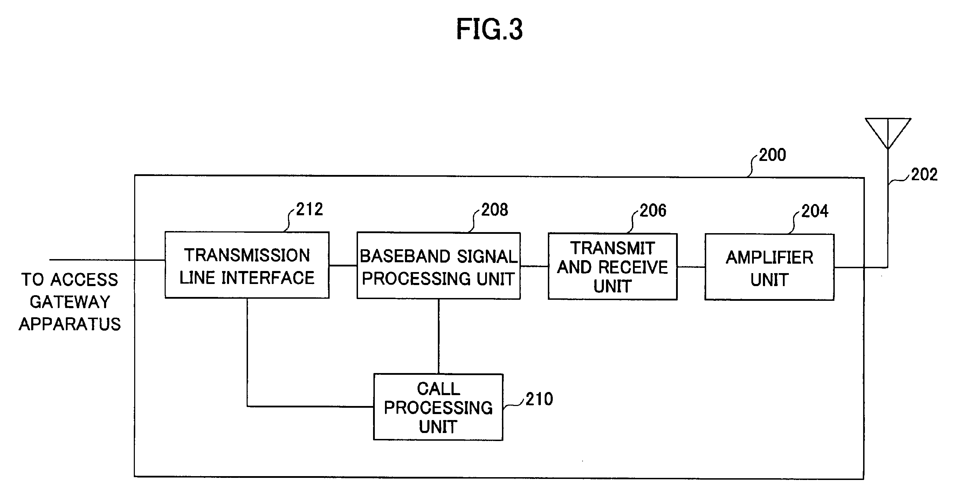

The base station apparatus 200 of an embodiment of the present invention is described with reference to Fig.3.

The base station apparatus 200 of the present embodiment includes a transmit and receive antenna 202, an amplifier unit 204, a transmit and receive unit 206, a baseband signal processing unit 208, a call processing unit 210, and a transmission line interface 212.

User data to be transmitted from the base station apparatus 200 to the user apparatus 100ₙ in the downlink is input to the baseband signal processing unit 208 from an upper station placed in the upper side of the base station apparatus 200, that is, from an access gateway apparatus 300, for example, via the transmission line interface 212.

The baseband signal processing unit 208 performs processing of PDCP layer, and transmission processing in the RLC layer such as segmentation and concatenation for user data and transmission processing of RLC (radio link control) retransmission control, and performs MAC (Medium Access Control) retransmission control processing such as HARQ transmission processing, and performs scheduling, transmission format selection, channel coding, and inverse fast Fourier transform (IFFT). Then, the processed signal is transferred to the transmit and receive unit 206. Also, as to the signal of the physical downlink control channel which is the downlink control channel, transmission processing such as channel coding and inverse fast Fourier transform and the like is performed, and the processed signal is transferred to the transmit and receive unit 206.

The transmit and receive unit 206 performs frequency conversion processing for converting the baseband signal output from the baseband signal processing unit 208 into a radio frequency band. After that, the baseband signal is amplified by the amplifier unit 204 so that the signal is transmitted by the transmit and receive antenna 202.

On the other hand, as to data to be transmitted from the mobile station 100ₙ to the base station apparatus 200 in the uplink, a radio frequency signal received by the transmit and receive antenna 202 is amplified by the amplification unit 204, and is frequency-converted by the transmit and receive unit 206 so that the signal is converted to a baseband signal, and the baseband signal is input into the baseband signal processing unit 208.

The baseband signal processing unit 208 performs FFT processing, IDFT processing, error correction decoding, reception processing of MAC retransmission control, reception processing of RLC layer for the user data included in the input baseband signal, so that the processed signal is transferred to the access gateway apparatus 300 via the transmission line interface 212.

In addition, as described later, the baseband signal processing unit 208 performs transmission power control for each channel in downlink.

The call processing unit 210 performs call processing such as setup or release of a communication channel, management of state of the radio base station 200, and management of radio resources.

The call processing unit 210 reports information on the frequency being used for communication to the transmission power control unit 2084. The information on frequency being used for communication may be, for example, a center frequency of a frequency band in uplink and downlink for communication, or may be a frequency number. The frequency number in 3GPP is defined in the non-patent document 3 (TS25.101, 5.4.3). Or, the information on frequency being used for communication may be frequency bands. Frequency bands (I, II, III, IV, ...) in 3GPP are defined in the non-patent document 3 (TS 25.101, 5.2), for example.

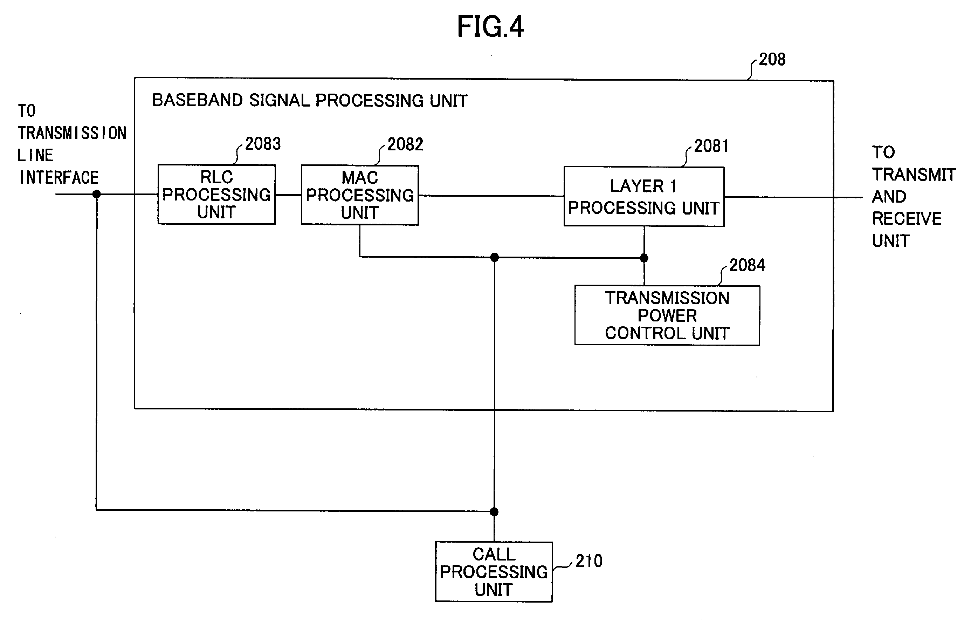

The configuration of the baseband signal processing unit 208 is described with reference to Fig.4.

The baseband signal processing unit 208 includes a layer 1 processing unit 2081, a MAC (Medium Access Control) processing unit 2082, an RLC processing unit 2083, a transmission power control unit 2084.

The layer 1 processing unit 2081, the MAC processing unit 2082, and the transmission power control unit 2084 in the baseband signal processing unit 208, and the call processing unit 210 are connected with each other.

The layer 1 processing unit 2081 performs channel coding and IFFT processing for data transmitted by downlink, and performs channel decoding, IDFT processing and FFT processing and the like for data transmitted by the uplink. The data transmitted in the downlink indicates user data and broadcast information in the downlink, signal on paging, message 2 and message 4 in the random access procedure, dedicated control channel (DCCH), and the like.

By the way, the physical channel to which the broadcast information is mapped may be called CCPCH (Common Control Physical Channel). Or, the physical channel to which the broadcast information is mapped may be called P-BCH. Or a part of the broadcast information may be mapped to PDSCH. The broadcast information mapped to PDSCH may be called Dynamic BCH, for example.

In addition, also for the reference signal and the synchronization signal transmitted by downlink, the layer 1 processing unit 2081 multiplexes them to data transmitted by the downlink, and performs transmission processing such as IFFT processing.

In addition, based on transmission power information reported from the transmission power control unit 2084, the layer 1 processing unit 2081 sets transmission power of subcarriers or resource blocks to which downlink reference signal, synchronization signal, physical downlink control channel, user data, broadcast information, signal on paging, message 2 or message 4 in the random access procedure are mapped.

The layer 1 processing unit 2081 receives, from the MAC processing unit 2082, ID of user performing communication using the physical downlink shared channel and information of transport format of the user data, that is, downlink scheduling information, and receives ID of user performing communication using the physical uplink shared channel and information of transport format of the user data, that is, uplink scheduling grant.

In addition, the layer processing unit 2081 performs transmission processing such as channel coding and IFFT processing for ID of user performing communication using the physical downlink shared channel and information of transport format of the user data, that is, downlink scheduling information, and for ID of user performing communication using the physical uplink shared channel and information of transport format of the user data, that is, uplink scheduling grant.

The ID of user performing communication using the physical downlink shared channel and information of transport format of the user data, that is, downlink scheduling information, and ID of user performing communication using the physical uplink shared channel and information of transport format of the user data, that is, uplink scheduling grant are mapped to the physical downlink control channel which is the downlink control channel.

In addition, the layer 1 processing unit 2081 also performs demodulation and decoding for CQI and acknowledgement information mapped to the physical uplink control channel transmitted in the uplink, and reports the decoding result to the MAC processing unit 2082.

The MAC processing unit 2082 performs MAC retransmission control of downlink user data such as HARQ transmission processing, scheduling, selection of transmission format, assignment of frequency resources, and the like. The scheduling processing indicates processing for selecting a mobile station that receives user data using the shared channel in the downlink of the subframe. The transmission format selection processing indicates processing for determining modulation scheme, coding rate and data size on user data received by the mobile station selected in the scheduling. The determination of the modulation scheme, coding rate and data size is performed based on quality of CQI reported from the mobile station in the uplink. In addition, the assignment processing of the frequency resources indicates processing for determining resource blocks used for the user data received by the mobile station selected by the scheduling.

The determination of the resource blocks is performed based on CQI reported from the mobile station in the uplink. The CQI reported from the mobile station is reported by the layer 1 processing unit 2081. Then, the MAC processing unit 2082 reports the downlink scheduling information determined by the scheduling processing, transmission format selection processing, and frequency resource assignment processing to the layer 1 processing unit 2081, wherein the downlink scheduling information includes ID of user performing communication using the physical downlink shared channel and information of transport format of the user data.

The MAC processing unit 2082 may also perform the scheduling processing, transmission format selection processing and frequency resource assignment processing relating to the downlink user data on broadcast information, signal on paging, message 2 and message 4 in the random access procedure, and control signals.

In addition, the MAC processing unit 2082 performs reception processing of MAC retransmission control of uplink user data, scheduling processing, selection of transmission format, assignment of frequency resources, and the like. The scheduling processing indicates processing for selecting a mobile station that transmits user data using the shared channel in a predetermined subframe. The transmission format selection processing indicates processing for determining modulation scheme, coding rate and data size on user data transmitted by the mobile station selected in the scheduling. The determination of the modulation scheme, coding rate and data size is performed based on SIR of a sounding reference signal or path loss transmitted from the mobile station in the uplink. In addition, the assignment processing of the frequency resources indicates processing for determining resource blocks used for transmission of the user data transmitted by the mobile station selected by the scheduling.

The determination of the resource blocks is performed based on SIR of the sounding reference signal transmitted from the mobile station in the uplink. Then, the MAC processing unit 2082 generates and reports the uplink scheduling grant determined by the scheduling processing, transmission format selection processing, and frequency resource assignment processing to the layer 1 processing unit 2081, wherein the uplink scheduling grant includes ID of user performing communication using the physical uplink shared channel and information of transport format of the user data.

The RLC processing unit 2083 performs transmission processing of RLC layer such as segmentation/concatenation, and transmission processing in RLC retransmission control and the like for downlink packet data, and performs reception processing of RLC layer such as segmentation/concatenation, reception processing of RLC retransmission control and the like for uplink data. In addition, the RLC processing unit 2083 may perform PDCP layer processing.

The transmission power control unit 2084 receives information on the frequency being used for communication from the call processing unit 210. The information on frequency being used for communication may be, for example, a center frequency of a frequency band in uplink and downlink for communication, or may be a frequency number. The frequency number in 3GPP is defined in the non-patent document 3 (TS25.101, 5.4.3). Or, the information on frequency being used for communication may be frequency bands. Frequency bands (I, II, III, IV, ...) in 3GPP are defined in the non-patent document 3 (TS 25.101, 5.2), for example.

The transmission power control unit 2084 sets the transmission power of the downlink channel based on the frequency being used for communication. In the following, a channel for transmitting broadcast information (to be referred to as broadcast channel, hereinafter) is considered as a downlink channel.

The transmission power control unit 2084 has a predetermined threshold. The transmission power control unit 2084 may set the transmission power of the broadcast channel to be 4W when the frequency being used for communication is greater than the predetermined threshold, and may set the transmission power of the broadcast channel to be 6W when the frequency being used for communication is not greater than the predetermined threshold. That is, the transmission power control unit 2084 may set the transmission power in the case when the frequency being used for communication is greater than predetermined threshold to be smaller than the transmission power in the case when the frequency being used for communication is not greater than predetermined threshold.

Alternatively, the transmission power control unit 2084 may set the transmission power of the broadcast channel to be 6W when the frequency band being used for communication is the band VI (uplink 830-840 MHz, downlink 875-885 MHz), and may set the transmission power of the broadcast channel to be 4W when the frequency band being used for communication is the band I (uplink 1920-1980 MHz, downlink 2110-2170 MHz).

That is, the transmission power control unit 2084 in the base station apparatus 200 controls transmission power which is one of radio resources of the broadcast channel according to the frequency being used for communication.

The features for the broadcast channel are merely examples, and similar processing may be applied to transmission power of downlink user data, a signal on paging, Message 2 and Message 4 in random access procedure, dedicated control signal (DCCH), reference signal and synchronization signal transmitted by the downlink, other than the broadcast channel.

In the above-mentioned example, transmission power of each channel is controlled based on the frequency being used for communication. Instead of that, transmission format of each channel may be controlled based on the frequency being used for communication, that is, modulation scheme, coding rate and data size for user data may be controlled. In this case, the MAC processing unit 2082 performs the above-mentioned processing. That is, the MAC processing unit 2082 may set a data size in the case when the frequency being used for communication is greater than the predetermined threshold to be a value greater than a data size in the case when the frequency being used for communication is not greater than the predetermined threshold, in the selection processing of transmission format. Alternatively, the MAC processing unit 2082 may use fixed data size, and in the processing of selection of the transmission format, the MAC processing unit 2082 may set the number of resource blocks in the case when the frequency being used for communication is greater than the predetermined threshold to be a value smaller than the number of resource blocks in the case when the frequency being used for communication is not greater than the predetermined threshold. In this case, the call processing unit 210 reports information on the frequency being used for communication to the MAC processing unit 2082.

That is, the MAC processing unit 2082 of the base station apparatus 200 controls the number of frequency resources which are a kind of radio resources of each channel or signal, that is, controls the number of resource blocks, according to the frequency being used for communication. Or, the MAC processing unit 2082 may not only control the number of resource blocks but also control modulation scheme and data size and the like at the same time. That is, the MAC processing unit 2082 of the base station apparatus 200 may control transmission format of each channel or signal according to the frequency being used for communication.

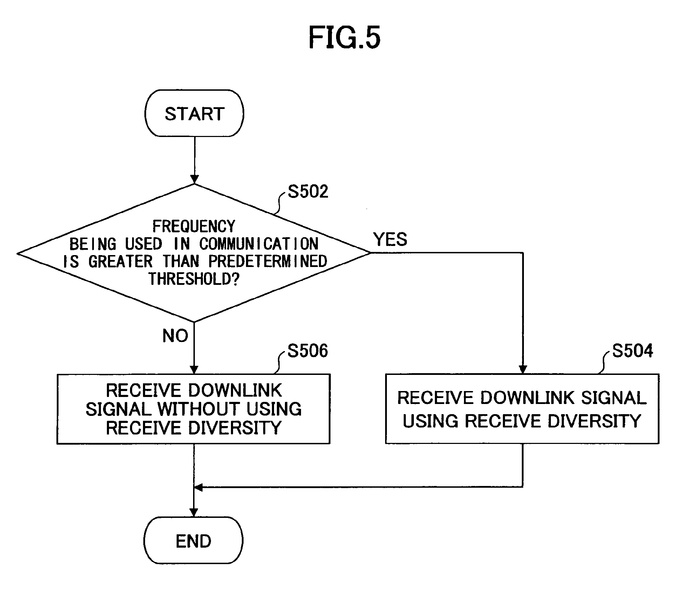

A communication control method used in the mobile station according to the present embodiment is described with reference to Fig.5. For the sake of convenience of explanation, it is assumed that the mobile station enters a cell by handover. In step S502, it is checked whether the frequency used by the mobile station for communication is greater than a predetermined threshold. The threshold may be 1 GHz, for example. When the frequency is greater than 1 GHz, the process goes to step S504. In this case, the mobile station receives a downlink signal using a plurality of antennas to perform receive diversity. On the other hand, when the frequency is not greater than 1 GHz, the process goes to step S506. In this case, the mobile station receives the signal using one antenna.

In the above-mentioned example, a case where the mobile station enters a cell by handover is shown. Instead of that, similar communication control method is applied also in a case where the mobile station starts communication in a cell. By the way, the case for starting communication in a cell corresponds to a case in which the mobile station originates a call or receives a call, for example.

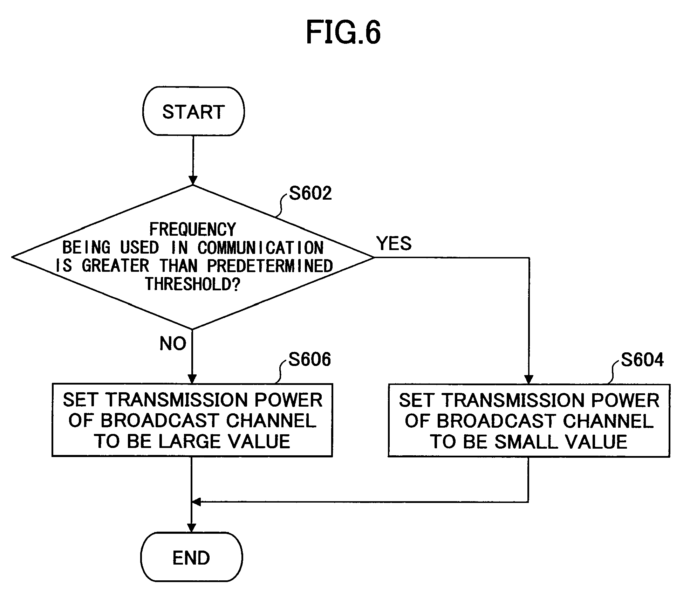

Fig.6 shows a communication control method used in the base station according to the present embodiment. In step S602, it is determined whether the frequency used for communication with the user apparatus is greater than a predetermined threshold. When the frequency is greater than the threshold, the process goes to step S604. In the case when the process reaches the step S604, since the frequency is greater than the threshold, the user apparatus performs diversity reception using a plurality of antennas. Thus, even when transmission power of the broadcast channel and the like is somewhat low, it is predicted that the user apparatus can maintain required quality. Therefore, the transmission power of the broadcast channel and the like is set to be smaller than that set when one antenna reception is performed in the user apparatus. On the other hand, when the frequency is not greater than the threshold, the user apparatus performs one antenna reception. Therefore, the transmission power of the broadcast channel and the like is set to be greater than that set when diversity reception is assumed in the user apparatus.

In the mobile communication system (radio communication system) in the above-mentioned embodiment, it is desirable that every mobile station performs the above-mentioned processing for switching between applying or not-applying of the receive diversity based on the frequency. This is realized by defining performance on reception characteristics of the mobile station as follows, for example.

In performance definition when the frequency is equal to or less than 1 GHz, the performance is defined as one in the case where receive diversity is not applied. In performance definition when the frequency is equal to or greater than 1 GHz, the performance is defined as one in the case where receive diversity is applied.

Alternatively, for example, as a system, when the frequency is equal to or greater than 1 GHz, receive diversity may be defined as a mandatory function, and when the frequency is equal to or less than 1 GHz, receive diversity may be defined as an optional function. In this case, when the frequency is equal to or less than 1 GHz, the network operator can perform design of the broadcast information and the reference signal, that is, perform setting of transmission power of the broadcast information and the reference signal based on the assumption that receive diversity is not applied. When the frequency is equal to or greater than 1 GHz, the network operator can perform design of the broadcast information and the reference signal, that is, perform setting of transmission power of the broadcast information and the reference signal based on the assumption that receive diversity is applied. As a result, it becomes possible to perform efficient radio resource assignment.

According to the present embodiment, it is not necessary to use receive diversity when the frequency for communication is equal to or less than a threshold value. Therefore, when designing a terminal, as to the distance between antennas for preparation of receive diversity, it is only necessary to consider the distance between antennas when using 2 GHz as the frequency. That is, it is not necessary to consider the distance between antennas when the frequency is small, that is, when the frequency is 800 MHz. Therefore, the problem that the size of the mobile station increases can be effectively avoided.

In the above-mentioned embodiment, although examples are explained in a system to which Evolved UTRA and UTRAN (another name: Long Term Evolution or Super 3G) is applied, the mobile station, the base station apparatus, the mobile communication system and the communication control method of the present invention can be applied to other systems that perform communication using a shared channel.

As described above, while the present invention is described with reference to specific embodiments, the respective embodiments are merely exemplary, so that a skilled person will understand variations, modifications, alternatives, and replacements. While specific numerical value examples are used to facilitate understanding of the present invention, such numerical values are merely examples, so that any appropriate value may be used unless specified otherwise. For convenience of explanation, while the apparatus according to the embodiments of the present invention is explained using functional block diagrams, such an apparatus as described above may be implemented in hardware, software, or a combination thereof. The present invention is not limited to the above embodiments, so that variations, modifications, alternatives, and replacements are included in the present invention without departing from the spirit of the present invention.

The present international application claims priority based on Japanese patent application No.2007-077899, filed in the JPO on March 23, 2007, and the entire contents of the Japanese patent application No.2007-077899 is incorporated herein by reference.

## Claims

1. A user apparatus that communicates with a base station apparatus in a mobile communication system, comprising:
a plurality of antennas;
a selection unit configured to select an antenna according to a frequency; and
a reception unit configured to receive a signal using the antenna selected by the selection unit.

2. The user apparatus as claimed in claim 1, wherein,
the selection unit selects all of the plurality of antennas when the frequency is greater than a predetermined threshold; and
the selection unit selects one of the plurality of antennas when the frequency is not greater than the predetermined threshold.

3. A base station apparatus that communicates with a user apparatus in a mobile communication system, the user apparatus comprising:
a plurality of antennas;
a selection unit configured to select an antenna according to a frequency; and
a reception unit configured to receive a signal using the antenna selected by the selection unit,
the base station apparatus comprising:
a control unit configured to control radio resources of a first channel according to the frequency.

4. The base station apparatus as claimed in claim 3, wherein the first channel is at least one of reference signal, synchronization signal, broadcast channel, paging channel, and, message 2 or message 4 in a random access procedure.

5. A mobile communication system including a user apparatus and a base station apparatus that communicates with the user apparatus, the user apparatus comprising:
a plurality of antennas;
a selection unit configured to select an antenna according to a frequency; and
a reception unit configured to receive a signal using the antenna selected by the selection unit,
the base station apparatus comprising:
a control unit configured to control radio resources of a first channel according to the frequency.

6. The mobile communication system as claimed in claim 5, wherein
the selection unit selects all of the plurality of antennas when the frequency is greater than a predetermined threshold; and
the selection unit selects one of the plurality of antennas when the frequency is not greater than the predetermined threshold.

7. A communication control method in a user apparatus that communicates with a base station apparatus in a mobile communication system, comprising:
a first step of selecting an antenna according to a frequency; and
a second step of receiving a signal using the antenna selected in the first step.

8. The communication control method as claimed in claim 7, the first step including:
selecting all of the plurality of antennas when the frequency is greater than a predetermined threshold; and
selecting one of the plurality of antennas when the frequency is not greater than the predetermined threshold.
